# EUROPÄISCHE PATENTANMELDUNG

(11) **EP 1 571 483 A1**
(43) Veröffentlichungstag der Anmeldung: **07.09.2005**
(21) Anmeldenummer: 04100846.7
(22) Anmeldetag: 03.03.2004
(51) Int. Cl.: G02C 3/00

(54) **Halterung für eine Brille**

(71) Anmelder: Turnaround Solution GmbH, 6304 Zug (CH)
(72) Erfinder: Dahinden, Claude, 6345, Neuheim (CH)
(74) Vertreter: Falk, Urs

(57) **Zusammenfassung**

Eine Halterung (1) für eine Brille besteht aus einem flachen Körper (2) mit einem Loch (3) für die Aufnahme eines Brillenarms einer Brille, die mindestens teilweise durch deformierbare Laschen (6) begrenzt ist. Die Halterung (1) umfasst einen Anhänger (4) für die Aufnahme eines Tragriemens (7) oder eines Verbindungsglieds zu einem Tragriemen, damit die Halterung (1) an einem um den Hals gehängten Tragriemen getragen werden kann. Bevorzugt besteht die Halterung (1) aus einem einzigen Stück elastischen Materials.

## Beschreibung

Die Erfindung betrifft eine Halterung für eine Brille.

Brillenträger sehen sich immer wieder mit der Situation konfrontiert, dass sie ihre Brille abziehen und irgendwo deponieren und dann nicht mehr wissen, wo sie sie deponiert haben. Wenn sie die Brille in die Brusttasche ihres Hemdes oder Kittels stecken oder bei einem Knopf ihres Hemdes einstecken, besteht die Gefahr, dass die Brille zu Boden fällt, wenn sich der Brillenträger unvermittelt ohne auf die Brille zu achten nach vorne beugt.

Die Erfindung geht aus von dieser Beobachtung und dem Wunsch, diesen Problemen Abhilfe zu schaffen.

Die genannte Aufgabe wird erfindungsgemäss gelöst durch die Merkmale des Anspruchs 1.

Die Erfindung besteht in einer Halterung für eine Brille, die an einem Tragriemen um den Hals gehängt getragen werden kann. Eine Brille besteht aus einem Brillengestell mit einem zentralen Steg, der die beiden Brillengläser aufnimmt, und zwei seitlichen Brillenarmen, die je durch ein Gelenk mit dem Steg verbunden sind. Die Halterung besteht aus einem flachen Körper mit einem Loch, das durch deformierbare Laschen begrenzt ist. Die Funktion der Laschen besteht darin, die Grösse des Lochs an die Form und Grösse des Brillenarms einer Brille anzupassen. Die Halterung umfasst weiter einen Anhänger mit einer weiteren Öffnung, durch die ein Tragriemen geführt ist oder in die ein Metallring eingeführt ist, der an einen Karabinerhaken angehängt werden kann, der an einem Tragriemen hängt. Um die Brille in der Halterung zu deponieren, klappt der Brillenträger die beiden Brillenarme zusammen und führt einen der beiden Brillenarme der Brille durch das Loch hindurch, bis das Gelenk zwischen dem Brillenarm und dem Brillensteg an der Halterung zum Anschlag kommt. Dabei werden die Laschen aus ihrer Ruhelage ausgelenkt, wobei ihre freien Enden den Brillenarm umschliessen. Die Brille hängt nun mit ihrem Gewicht in der Halterung, ohne dass sie aus der Halterung herausfallen kann.

Die Halterung besteht vorzugsweise aus einem Stück elastischen Materials, das ähnliche Eigenschaften wie Gummi aufweist. Eine solche Halterung lässt sich sehr billig herstellen. Die Halterung kann aber auch aus mehreren Teilen bestehen, beispielsweise aus einem metallischen Körper und Laschen aus Leder.

Die Erfmdung wird nachfolgend anhand von zwei Ausführungsbeispielen und anhand der Zeichnung näher erläutert.

Es zeigen:
- Fig. 1: in perspektivischer Ansicht eine Halterung in einfacher Ausführung aus einem einzigen Stück elastischen Materials,
- Fig. 2: schematisch und in Aufsicht eine Halterung in Luxusausführung, und
- Fig. 3: eine solche Halterung im Gebrauch.

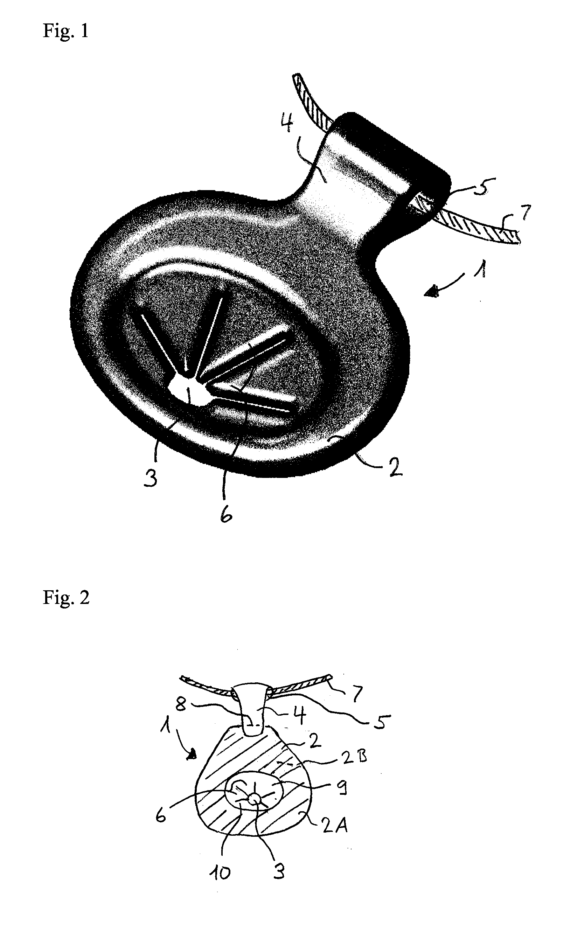

Die Fig. 1 zeigt eine Halterung 1 in einer für eine kostengünstige Herstellung geeigneten Ausführung aus einem einzigen Stück elastischen Materials, beispielsweise aus Gummi oder einem ähnlich deformierbaren, hautverträglichen Kunststoff. Die Halterung 1 besteht aus einem flachen, beispielsweise ovalen oder runden Körper 2 mit einem ersten Loch 3 und einem Anhänger 4 mit einem zweiten Loch 5. Das erste Loch 3 ist teilweise durch deformierbare Laschen 6 begrenzt. Die dargestellte Halterung 1 enthält drei Laschen 6, deren Spitzen einen Winkelbereich von etwa 150° des ersten Lochs 3 begrenzen. Das erste Loch 3 dient für die Aufnahme eines der beiden Brillenarme einer Brille. Die Laschen 6 werden ausgelenkt, wenn ein Brillenarm der Brille durch das erste Loch 3 gesteckt wird. Dabei passt sich die Grösse des ersten Lochs 3 automatisch dem Querschnitt des Brillenarms an. Das zweite Loch 5 dient zur Aufnahme eines Tragriemens 7 oder eines Metallrings, der an einen Karabinerhaken angehängt werden kann. Das zweite Loch 5 verläuft vorzugsweise quer zum ersten Loch 3. Der Durchmesser des ersten Lochs 3 ist vergleichsweise klein gewählt, damit die Laschen 6 auch dünne Brillenarme satt umschliessen. Die äusseren Abmessungen der Halterung 1 betragen etwa 2-3 cm.

Die Fig. 2 zeigt eine Halterung 1, die aus mehreren Einzelteilen besteht. Der Körper 2 besteht aus einem Stück Metall mit zwei Ausnehmungen 9, das um eine Biegelinie 8 um 180° gebogen ist, so dass die beiden Ausnehmungen überlappen. Der Körper 2 besteht somit aus zwei miteinander verbundenen Metallplättchen 2A und 2B. Zwischen die beiden Metallplättchen 2A und 2B ist ein Stück Leder 10 eingeklemmt, das das erste Loch 3 und die Laschen 6 enthält. Die Laschen 6 sind durch mehrere, vom ersten Loch 3 ausgehende Schnitte im Leder 10 gebildet. An Stelle von Leder kann auch ein anderes elastisches bzw. deformierbares Material verwendet werden. Für die Aufnahme des Tragriemens 7 ist als Verbindungsglied ein Anhänger 4 aus Metall vorgesehen, der am Körper 2 befestigt ist.

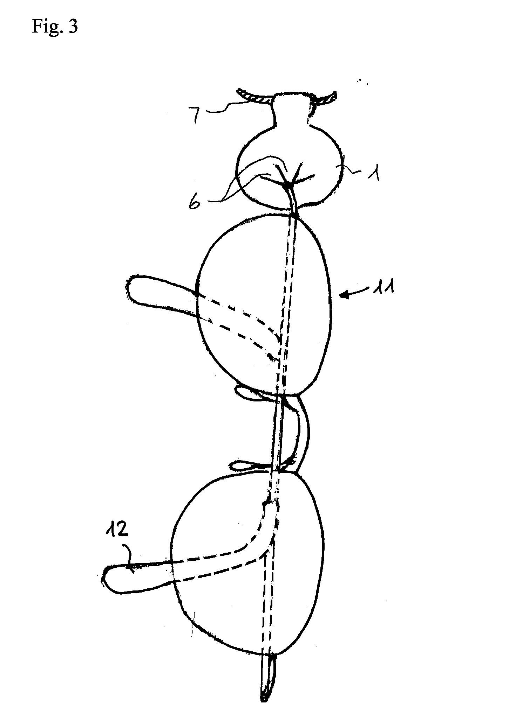

Die Fig. 3 zeigt die Halterung 1 gemäss dem Ausführungsbeispiel nach Fig. 1, in die eine Brille 11 eingesteckt ist. Beim Einführen des Brillenarms 12 werden die Laschen 6 deformiert bzw. ausgelenkt. Wenn die Brille 11 wieder aus der Halterung 1 herausgenommen wird, bildet sich die Deformation der Laschen 6 zurück und die Laschen 6 nehmen wieder ihre in der Fig. 1 gezeigte Ruhelage ein.

## Patentansprüche

1. Halterung (1) für eine Brille, bestehend aus einem flachen Körper (2) mit einem Loch (3) für die Aufnahme eines Brillenarms einer Brille, das mindestens teilweise durch deformierbare Laschen (6) begrenzt ist, und mit einem Anhänger (4) für die Aufnahme eines Tragriemens (7) oder eines Verbindungsglieds zu einem Tragriemen.

2. Halterung nach Anspruch 1, **dadurch gekennzeichnet, dass** die Halterung (1) aus einem einzigen Stück elastischen Materials besteht.
